# EUROPÄISCHE PATENTANMELDUNG

(11) **EP 0 556 712 A2**
(43) Veröffentlichungstag der Anmeldung: **25.08.1993**
(21) Anmeldenummer: 93102114.1
(22) Anmeldetag: 11.02.1993
(51) Int. Cl.: B60N 2/22

(54) **Exzenter-Planetengetriebe für einen Gelenkbeschlag von Kraftfahrzeugsitzen**

(30) Priorität: 17.02.1992 DE 4204693
(71) Anmelder: NAUE/JOHNSON CONTROLS ENGINEERING GmbH & CO. KG, D-42929 Wermelskirchen (DE)
(72) Erfinder: Schmale, Gerhard, W-5609 Hückeswagen (DE)
(74) Vertreter: Bergen, Klaus, Dipl.-Ing.

(57) **Zusammenfassung**

Exzenter-Planetengetriebe (1) für einen Gelenkbeschlag von Kraftfahrzeugsitzen weisen meist ein ungleichförmiges und verhältnismäßig hohes Bedienungsmoment zum Verändern der Winkellage der Lehne auf, und im Crashfall bleiben die Zähne des Ritzels (2) und des Innenzahnkranzes (4) nicht ausreichend oder gar nicht seitlich im Eingriff, wodurch die Haltefunktion herabgesetzt bzw. aufgehoben ist. Zur Vermeidung dieser Nachteile sind die Stege (11 und 12) des Ritzels (2) und Innenzahnkranzes (4) im Anschluß an ihre Lagerungsbereiche durch beidseitig eingedrückte Ringnuten (13, 14) elastisch-nachgiebig ausgeführt, und die Verzahnungskörper (2, 4) werden axial auf dem Lagerbolzen (8) mit engem Spiel geführt und sind durch sitzfeste Anlagen, einen Bund (18), einen Kragen (9), sicher gehaltert.

## Beschreibung

Es sind Exzenter-Planetengetriebe für einen Gelenkbeschlag von Kraftfahrzeugsitzen bekannt (DE-PS 16 80 128, DE-PS 28 34 492, DE-PS 32 44 399), bei denen die Lagerungen der Verzahnungskörper zu den Durchmessern verhältnismäßig schmal ausgeführt sind, so daß bei geringer Schiefstellung der Lagerbolzen zu den Verzahnungskörpern die Betätigung zur Winkelverstellung der Sitzlehne infolge der hierdurch bedingten Kantenpressung erschwert und hierbei zudem ein ungleichförmiges Moment aufzubringen ist. Geringe Schiefstellungen der Lagerbolzen zu dem Verzahnungskörper sind bei solchen Getrieben nicht zu vermeiden, weil diese Körper unabhängig voneinander an Blechpreßteilen, Rahmen der Sitze und Lehnen, angeschlossen werden. Außerdem liegen die Lagerungen seitlich - also nicht mittig und symmetrisch - zu den Verzahnungen, wodurch zusätzliche Kippmomente eingeleitet werden und hierdurch die Erschwernis in der Bedienung erhöht wird. Im Crashfall wird der Lagerbolzen des Getriebes zu den Zahnkörpern in verstärkter Weise, auch durch eingeleitete Deformationen, weiter schräg gestellt, so daß die Verzahnungen somit teilweise oder ganz seitlich außer Eingriff kommen, wodurch die Bruchfestigkeit weiter gemindert bzw. der Halt für die Stellung der Lehne nicht mehr gegeben ist. Dadurch, daß außerdem die Verzahnungskörper axial nicht besonders spielarm und gegen größere Krafteinwirkungen nicht ausreichend widerstandsfähig gelagert sind, werden diese negativen Einflüsse durch ein Auseinandergehen auf der Achse der Verzahnungskörper noch weiter begünstigt. Bei der hauseigenen, diesen bekannten Lösungen gegenüber verbesserten Ausbildung der Lagerungsverhältnisse eines Exzenter-Planetengetriebes dieser Art, nach der nicht vorveröffentlichten Patentanmeldung (Aktenzeichen P 41 17 497.6-16) liegen zwar diese hauptsächlichen Übelstände nicht vor, indem sowohl die Mitte der Verzahnungen axial mit der Anlage beider Verzahnungskörper im Lagerungsbereich auf dem Lagerbolzen zusammenfällt als auch, daß die Breite ihrer Lagerungen dem Ausgangsmaterial gegenüber merklich verbreitert ist. Ein gewisses Schiefstellen des Lagerbolzens zu den Verzahnungskörpern bzw. eine Verzwängung in diesem Sinne ist auch hier infolge der nicht präzisen Montageverhältnisse letzterer an den aus Biechpreßteilen bestehenden Sitz- und Lehnenrahmen nicht zu vermeiden.

Bei solchen Verhältnissen wirkt es sich nachteilig aus, daß die Steifheit der Verzahnungskörper im Anschluß an den Lagerungsbereich infolge ihrer gleichmäßig durchgehenden Stärke in der Ausgangsmaterialdicke sehr hoch ist, so daß bei der manuellen Winkelverstellung der Lehne mittels des Exzenter-Planetengetriebes auch hier oft durch das Überwindenmüssen der Verzwängungen höhere und ungleichmäßige Bedienungsmomente aufgebracht werden müssen, was als störend empfunden wird und wodurch die Tendenz zur Schiefstellung des Lagerbolzens erhöht wird. Hierbei wirkt erschwerend, daß oft die auf dem Sitz sitzende Person bei Verstellen der Winkellage noch mit dem Rücken an der Lehne anliegt, wodurch ein höheres Betätigungsmoment aufgebracht werden muß. Insbesondere bei Überlast, wie im Crashfall, steigern sich die auf den Lagerbolzen auftretenden Momente infolge der erwähnten starren Bauweise der Verzahnungskörper so sehr, daß sehr hohe Kantenpressungen in den Lagerungen auftreten und hierdurch eine starke axiale Sprengwirkung zum Auseinanderklaffen der Verzahnungskörper eintritt, so daß sowohl die Schiefstellung der Achse hohe Winkelbeträge erreicht als auch der Eingriff der Verzahnungen durch seitliches Voneinanderausweichen in Verbindung mit einer nachgiebigen axialen Halterung die Widerstandsfähigkeit des Getriebes mindert bzw. völlig aufhebt.

Der im Anspruch 1 angegebenen Erfindung liegt das Problem zugrunde, die Verhältnisse der Verzahnungskörper im Anschluß an den Lagerungsbereich bei den bekannten Getrieben dieser Art und auch beim Lösungsvorschlag gemäß der Patentanmeldung Aktenzeichen P 41 17 497.6-16 so zu verbessern, daß die geschilderten Erschwernisse im Bedienungskomfort bei der Winkelverstellung der Sitzlehne entfallen bzw. stark herabgesetzt werden und für den Crashfall günstige Eingriffsbedingungen der Verzahnungen gewährleistet bleiben, womit zwar bleibende Verformungen nicht vermieden werden können, aber Brüchen entgegengewirkt ist.

Die mit der Erfindung erzielten Vorteile bestehen insbesondere darin, daß das manuelle Winkelverstellen der Lehnen von Kraftfahrzeugsitzen über Exzenter-Planetengetriebe erleichtert ist sowie das aufzubringende Moment weitgehend gleichmäßig verläuft und, daß im Crashfall die Verzahnungskörper zueinander axial sicher gehaltert sind. Im Hinblick darauf, daß durch die bereits erwähnten geringeren Schrägstellungen des Lagerbolzens zu dem Verzahnungskörper Erschwernisse begründende Verspannungen bei solchen Getrieben bisheriger Bauart vorliegen, schafft die Erfindung in bezug auf die Auswirkung solcher Abweichungen dadurch Abhilfe, indem die Elastizität der Wälzkörper in der Winkelstellung zum Lagerbolzen erhöht wird, ohne die Festigkeit in bezug auf das übertragbare Drehmoment praktisch zu verringern. Da außerdem einem axialen Auseinanderklaffen der Verzahnungskörper im Lagerungsbereich durch geringes Spiel sowie stabile Anlagen in Verbindung mit dem Zusammenfallen von Mitte Verzahnung zur Anlage der beiden Wälzkörper auf dem Lagerbolzen entgegengewirkt ist, ist auch der Eingriff der Verzahnungen im Crashfall abgesichert, womit eine erhöhte Bruchsicherheit vorliegt.

Weitere Merkmale der Erfindung sind durch die Patentansprüche gekennzeichnet.

In der Zeichnung sind Ausführungsbeispiele der Erfindung dargestellt und werden im folgenden näher beschrieben. Es zeigen:
- Fig. 1: einen Querschnitt durch den Erfindungsgegenstand mit eingeprägten Ringnuten in den Stegen der Verzahnungskörper, wobei durch einen festen Bund und anderseitig durch Umbördelung des Lagerbolzens eine stabile axiale Fixierung der Verzahnungskörper erreicht ist,
- Fig. 2: eine Einzelheit Z nach Fig. 1, die den äußeren Bereich der Lagerung zeigt, bevor ein Bund zum axialen Halt erzeugt wurde,
- Fig. 3: wie Fig. 1, wobei jedoch die axiale Fixierung durch Impulsverschweißung einer Anlagebuchse mit dem Lagerbolzen erfolgt,
- Fig. 4: eine äußere Partie des losen Lagerbolzens nach Fig. 3,
- Fig. 5: wie Fig. 4, bei der die Impulsschweißung jedoch an der Stirnseite eines Lagerbereiches erfolgt.

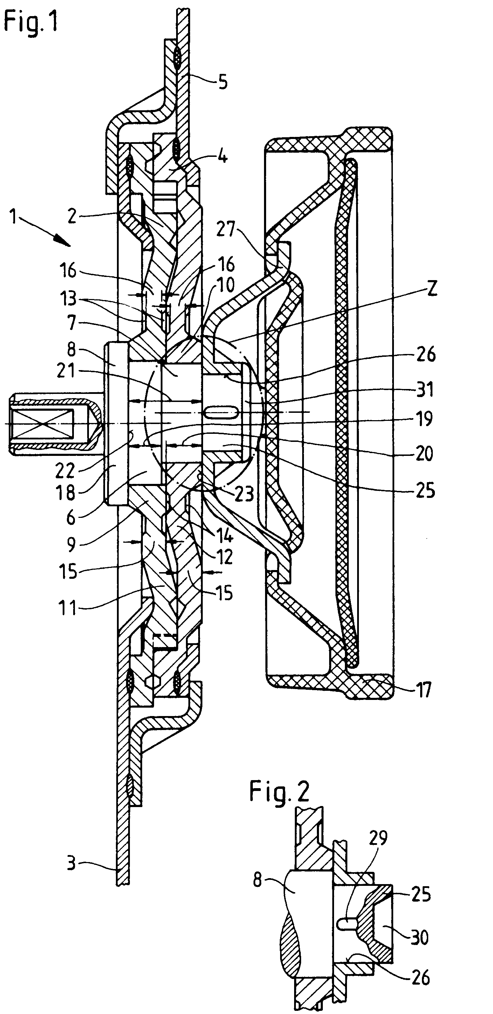

Bei einem Exzenter-Planetengetriebe 1 gemäß Fig. 1 ist mit einem Ritzel 2 ein Beschlagteil 3 durch Schweißung verbunden, das an einer Seite am nicht dargestellten Rahmen eines Kraftfahrzeugsitzes anschließt. Mit einem mit dem Ritzel 2 in Eingriff stehenden Innenzahnkranz 4 ist gleichermaßen ein Beschlagteil 5 verbunden, das an einer Seite einer nicht dargestellten, winkelverstellbaren Lehne anschließt.

Das Ritzel 2 und der Innenzahnkranz 4 lagern in bekannter Weise auf zueinander exzentrisch liegenden Lagerbereichen 6 und 7 eines Lagerbolzens 8, wodurch in Verbindung mit der Zähnezahl des Ritzels 2, die um einen Zahn kleiner ist als die des Innenzahnkranzes 4, Selbsthemmung dieser Teile zueinander vorliegt. Im Anschluß an eine Habe 9 des Ritzels 2 und eine Nabe 10 des Innenzahnkranzes 4 sind Stege 11 des Ritzels 2 und 12 des Innenzahnkranzes 4 beidseitig durch gerundete, kalt eingearbeitete Ringnuten 13 bzw. 14 auf einer Stärke 16 von etwa 60% der Ausgangsmaterialstärke 15 verdünnt ausgeführt. Hierdurch wird eine höhere Elastizität der Verzahnungskörper, Ritzel 2 und Innenzahnkranz 4, im Bereich der Stege 11 und 12 in Lagerungsnähe erreicht, wodurch bereits bei der manuellen Winkelverstellung der Lehne durch Drehen an einem Handrad 17 unter normalen Belastungen auf das Exzenter-Planetengetriebe 1 ein erhöhter Bedienungskomfort im Hinblick auf ein gleichmäßigeres aufzuwendendes Drehmoment erreicht wird. Dies erklärt sich dadurch, daß bei solchen Exzenter-Planetengetrieben 1, bei denen sowohl die Lagerungen der Ritzel 2 und die des Innenzahnkranzes 4 im Verhältnis zu den Lagerdurchmessern eine kleine Lagerbreite von etwa nur einem Drittel desselben aufweisen, so daß bei den vorliegenden Abweichungen bei solchen Exzenter-Planetengetrieben in der Geradstellung der Lagerbolzen 8 zu den Verzahnungskörpern, Ritzel 2 und Innenverzahnung 4, Verzerrungen vorliegen, die Kantenpressungen in den Lagerungen hervorrufen, wodurch bei den Exzenter-Planetengetrieben dieser Art Erschwernisse durch höher aufzuwendende Drehmomente mit ungleichen Verläufen zu verzeichnen sind, die aber durch die erhöhte Elastizität der erfinderischen Verzahnungskörper 2 und 4 abgebaut werden. Außerdem beträgt der Teilkreisdurchmesser der Verzahnungen fast das Vierfache der Lagerdurchmesser, wodurch die erwähnten Erschwernisse noch gesteigert werden.

Innenseitig liegt das Ritzel 2 axial an einem Bund 18 des Lagerbolzens 8 an.

Das axiale Spiel der Verzahnungskörper auf dem Lagerbolzen wird durch entsprechend eng gehalterte Fertigungstoleranzen klein ausgeführt, indem sowohl die Summe der beiden Breiten 19 und 20 der Haben 9 und 10 als auch ein Abstand 21 der Stirnflachen 22 des Bundes 18 und einer Stirnfläche 23 eines Nabenflanschteiles 27 entsprechend zueinander abgestimmt sind.

Auf einen äußeren Zapfen 25 des Lagerbolzens 8 ist ein Sitzteil 26 des Nabenflanschteils 27 aufgesetzt und durch eine Paßfeder 29 auf Verdrehung gehaltert. Wie Fig. 2 erkennen läßt, ist der äußere Zapfen 25 des Lagerbolzens 8 um so viel länger als der Sitzteil 26 des Nabenflanschteils 27 ausgeführt und stirnseitig mit einer solchen Aushöhlung 30 versehen, daß nach Aufsetzen des Nabenflanschteils 27 auf den Zapfen 25 durch Vernietung oder Umbördelung seines überstehenden Bereiches ein Kragen 31 entsteht, der sich an das Nabenflanschteil 27 fest anlegt und es axial sicher festlegt.

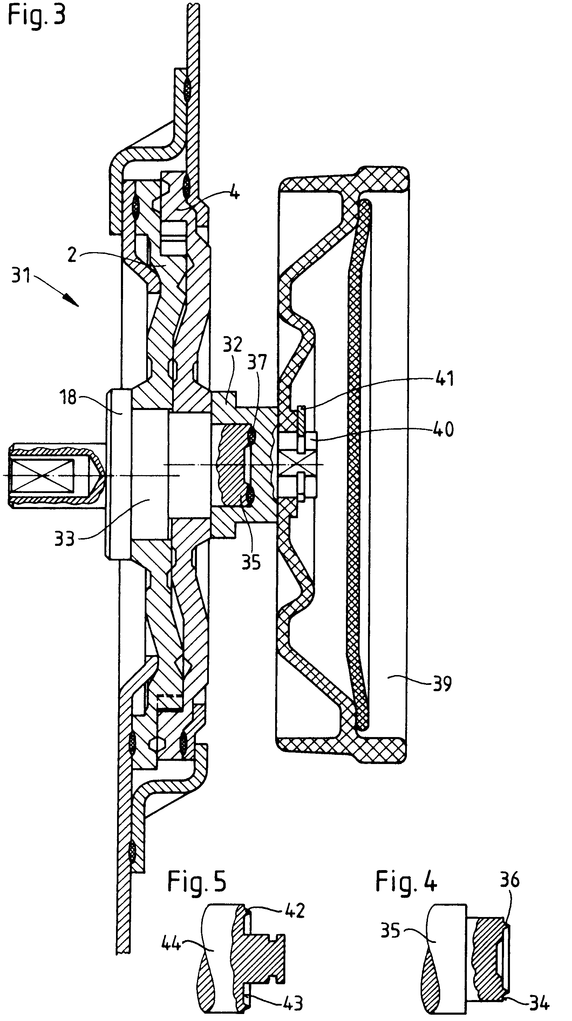

Bei einem Exzenter-Planetengetriebe 31 gemäß Fig. 3 werden das Ritzel und der Innenzahnkranz 4 axial ebenfalls innenseitig durch den Bund 18 eines Lagerbolzens 33 und außenseitig durch die Anlage an einer Bundbuchse 32 ebenfalls mit geringem Spiel gelagert.

Die Bundbuchse 32 sitzt auf einem Zapfen 35 des Lagerbolzens 33, die durch eine Impulsschweißung 37 fest mit ihm verbunden ist, wodurch ein axial hochbelastbarer Anschluß geschaffen ist. Für das Erreichen einer solchen qualitativ hochwertigen Impulsschweißung ist die Stirnfläche 34 etwa mittig gemäß Fig. 4 mit einem Schweißring 36 mit dreieckigem Querschnitt versehen.

Ein Handrad 39 ist passend auf einen äußeren Zapfen 40 des Lagerbolzens 33 aufgesetzt und über einen Sicherungsring 41 axial gehaltert.

Gemäß Fig. 5 ist gleichermaßen eine Impulsschweißung zwischen einem Lagerbolzen 44 und der Bundbuchse 32 vorgesehen mit dreieckigem Querschnitt an einer Stirnfläche 43, für die ein Schweißring 42 mittig an dieser Stirnfläche 43 des Lagerbolzens 44 vorgesehen ist.

Die Erfindung ist gleichermaßen auf Exzenter-Planetengetriebe dieser Art anwendbar, bei denen, wie es durch die deutsche Patentanmeldung, Aktenzeichen DE-PS 16 80 128, DE-PS 28 34 492, DE-PS 32 44 399, bekannt ist, zwischen dem Ritzel und dem Innenzahnkranz auf dem Lagerbolzen ein Distanzring vorgesehen ist.

## Patentansprüche

1. Exzenter-Planetengetriebe für Gelenkbeschläge von Kraftfahrzeugsitzen, das als Drehverbindung, Neigungseinstellung und Feststelleinrichtung dient, mit durch Kaltfließpressen erzeugtem Ritzel und Innenzahnkranz, gekennzeichnet durch beidseitig sowohl in den Steg (11) des Ritzels (2) als auch in den Steg (12) des Innenzahnkranzes (4) benachbart zur jeweiligen Nabe (9 bzw. 10) eingearbeitete Ringnuten (13 bzw. 14) und durch beidseitige Anlage der Haben (9, 10) zwischen auf der Achse angeordneten, bundartigen Bauelementen (8, 27) zum Erreichen eines engen axialen Lagerspiels.

2. Getriebe nach Anspruch 1, dadurch gekennzeichnet, daß der Steg (11) des Ritzels (2) und der Steg (12) des Innenzahnkranzes (4) im Anschluß an den Lagerungsbereich auf den Lagerbolzen (8, 33, 45) durch beidseitiges, symmetrisches Kalteinprägen gerundeter Ringnuten (13, 14) bis auf eine verbleibende Stärke (16) der Stege (11, 12) von etwa 60 % der Ausgangsmaterialstarke (15) eingeschnürt sind und das Ritzel (2) innenseitig mit seiner Nabe (9) an einer Stirnfläche (22) des Bundes (18) des Lagerbolzens (8) sowie der mit seiner Habe (10) hierzu anschließende Innenzahnkranz (4) außen an einer Stirnfläche (23) eines Nabenflanschteils (27) jeweils zur Anlage kommen, wobei das Summenmaß der beiden Breiten (19, 20) der Haben (9, 10) und der Abstand (21) der Stirnflächen (22, 23) des Bundes (18) bzw. des Nabenflanschteiles (27) toleranzmäßig so zueinander abgestimmt sind, daß für die Verzahnungskörper, Ritzel (2) und Innenzahnkranz (4) nur ein enges, axiales Lagerspiel vorliegt.

3. Getriebe nach Anspruch 1 oder 2, dadurch gekennzeichnet, daß die Stirnfläche (23) durch ein Nabenflanschteil (27) des Handrades (17) gebildet ist und die Nabe (24) desselben infolge des Erzeugens eines Kragens (31) durch Umbördeln oder durch Vernietung des Stirnbereiches eines Zapfens (25), auf dem sie sitzt, axial sicher gehaltert wird.

4. Getriebe nach einem oder mehreren der Ansprüche 1 bis 3, dadurch gekennzeichnet, daß eine eine Stirnfläche (23) für die axiale Anlage des Innenzahnkranzes (4) aufweisende Bundbuchse (32) durch Impulsschweißung (37) stirnseitig mit dem Lagerbolzen (33) fest angeschlossen ist, wobei hierfür die Stirnseite (34) eines Zapfens (35) bzw. eines Lagerbolzens (33) die Stirnseite (44) eines Lagerbolzens (45) im Querschnitt dreieckförmige Schweißringe (36, 42) aufweisen.
